# EUROPEAN PATENT SPECIFICATION

(11) **EP 3 560 083 B1**
(45) Date of publication and mention of the grant of the patent: **06.01.2021**
(21) Application number: 17803975.6
(22) Date of filing: 29.11.2017
(51) Int. Cl.: H02K 11/026, H02K 11/33, H02K 5/14

(54) **BRUSH-HOLDER FOR AN ELECTRIC MACHINE**
BÜRSTENHALTER FÜR EINE ELEKTRISCHE MASCHINE
PORTE-BALAI POUR UNE MACHINE ÉLECTRIQUE

(30) Priority: 22.12.2016 EP 16206220
(43) Date of publication of application: 30.10.2019
(73) Proprietor: MAHLE International GmbH, 70376 Stuttgart (DE)
(72) Inventor: COTAR MLAKAR, Janko, 5294 Dornberk (SI); GRAPULIN, Oton, 5250 Solkan (SI)
(74) Representative: BRP Renaud & Partner mbB Rechtsanwälte Patentanwälte Steuerberater
(86) International application number: PCT/EP2017/080854
(87) International publication number: WO 2018/114260

(56) References cited:
- EP-A1- 0 322 696
- EP-A1- 1 058 369
- WO-A2-2013/054023
- CN-U- 204 597 190
- US-A1- 2013 009 498
- US-B1- 6 291 913

## Description

The present invention relates to a brush-holder for an electric machine such as, for example, an electric motor or a generator, or a motor-generator, according to the preamble of claim 1. The invention also relates to an electric machine which is equipped with a brush-holder of this type. Finally, the invention relates to a method for manufacturing a brush-holder of this type.

In a direct-contact electric machine, the function of a brush-holder is providing electrically contact with rotor windings of the machine by means of corresponding contact elements, the "brushes". Customarily, a brush-holder of this type is provided with a housing having a brush support for the accommodation of at least one brush, wherein the function of the brush is providing the electrical contact with the rotor windings of the machine. In an electric machine, which is operating and/or is formed as an electric motor, the electrical contact via the brushes is called commutation. In an electric machine, which is operating and/or is formed as a generator, e.g. an alternator or lighting dynamo, the electrical contact via the brushes is called excitation.

Moreover, the housing also serves for the accommodation of electric and/or electronic units such as, for example, EMC units, in the interests of improving the electromagnetic compatibility of the machine. EMC stands for "Electromagnetic Compatibility". A further unit which is accommodated in the housing is customarily an ECU component for the electrical or electronic control of the machine. ECU stands for "Electronic Control Unit". This is customarily a microcontroller, which functions as a control device, and is configured as a control circuit accordingly.

A brush-holder according to the preamble of claim 1 is known from US 2013/0 009 498 A1. The known brush-holder has a housing which is provided with a front side and a back side. Said front side forms an installation side having a recess for the accommodation of elelectric and/or electronic units. At the known brush-holder, the back side is closed to define a bottom of the recess. Therefore, all brazing or welding operations for connecting the different electric and/or electronic units have to be performed at the front side.

A problem in brush-holders of this type is posed by a complex manufacture, which involves a plurality of separate production steps, frequently requiring different assembly stations, between which the brush-holder must be transferred. From US 2007/0206363 A1, an electronics holder for a generator or a lighting dynamo is known, having a housing in which an ECU component and a number of EMC units are accommodated. To this end, the housing is provided with a full-thickness housing cut-out, which is configured such that the ECU component can be inserted into the cut-out from one side, whereas the EMC units can be inserted into the cut-out from the other side. The housing is provided with printed conductors, which are exposed in the cut-out in order to permit electrical contact with the units inserted. The ECU component has a number of ECU contacts, which are welded to corresponding printed conductors. For the EMC units, plug-in contacts are configured on the printed conductors, with which the corresponding EMC contacts of the individual EMC units engage, and are thus electrically connected. For the fitting of the ECU component, the known electronics holder must be turned to one side and, for the fitting of the EMC units, must be turned to the other side, thus requiring a number of process steps. In addition, the EMC units must be inserted individually, thereby requiring the corresponding process steps and expenditure of time.

Other brush-holders are known for example from EP 1 058 369 A1, US 6 291 913 B1, WO 2013/054023 A2, and CN 204 597 190 U. From EP 0 322 696 A1 a solder connection between a connection element and a circuit board is known, wherein the circuit board has conductive paths which are printed on the circuit board.

The present invention addresses the issue of disclosing an improved form of embodiment of a brush-holder of the aforementioned type, or of an electric machine equipped therewith, or of an associated method for the manufacture thereof, which is specifically characterized by a reduction of manufacturing costs.

According to the invention, this issue is resolved by a brush-holder according to claim 1 and a method for manufacturing a brush-holder according to claim 20. Advantageous forms of embodiment are described in the dependent claims.

The invention is based upon the general concept of a brush-holder, the housing of which has a brush support for the accommodation of at least one brush adapted for providing electrical contact with rotor windings of the machine, wherein the housing is provided with a recess for the accommodation of a plurality of separate, electric and/or electronic units, and is configured such that these units can be inserted into the recess and electrically bonded from the same side. As a consequence of this design, the housing does not need to be turned for the fitting of units thereto, as the fitting of units and the electrical connecting of said units can be executed from the same side. Specifically, the units can be arranged in the recess, such that the electrical connecting of units can then proceed if all the units are already in place in the recess. Consequently, it is not necessary to first insert the first units, which are then electrically bonded, then to insert the second units, which are then electrically bonded, thus requiring a total of four steps. The brush-holder according to the invention can be completed in two process steps, namely, the insertion of the first and second units, and thereafter the connection of the first and second units. The housing of the brush-holder has a front side and a back side turned away from the front side. The front side serves as an installation side from which the units are inserted into the recess and from which the electrical bonding can be performed. The recess is adapted for positioning the units when inserted into the recess from the installation side. In particular, the recess can be provided with positioning elements for accommodating the respective unit and for holding said unit in a predetermined position relative to the housing. These positioning elements preferably define a form fit of the respective unit in the recess.

A form of embodiment is advantageous, in which a first such unit is formed by an EMC circuit for the improvement of electromagnetic compatibility. The EMC circuit has a printed circuit board, on which at least one EMC unit is arranged. Moreover, the printed circuit board can be configured with a plurality of parallel and adjacently-arranged EMC contacts, which are electrically contacted with the respective EMC units in an appropriate manner. Said EMC contacts project from said circuit board in a way to allow a welding process in order to perform electronic bonding. Said EMC contacts extend into a bonding space or bonding region which is formed by a portion of the recess. In the preferred case, the entire EMC circuit is formed by the printed circuit board, with components fitted. Measures for the improvement of electromagnetic compatibility customarily involve a number of EMC units. Appropriate EMC units include, for example, a capacitor, a varistor, a diode and a resistor. Preferably, all these EMC units are arranged on the printed circuit board to form the EMC circuit. By this arrangement, the EMC circuit can be prefabricated separately on the printed circuit board, then inserted into the housing in an exceptionally simple and cost-effective manner. For example, the EMC circuit comprises a total of three or four EMC units, which are attached to the printed circuit board such that, ultimately, only one component, namely the printed circuit board, needs to be inserted into the recess in the housing. Moreover, the standard production of electric terminals on a printed circuit board is far simpler and more cost-effective than in the case of separate units in the housing, which is generally of plastic construction. For example, EMC units can be electrically connected to the printed circuit board in a soldering kiln. Preferably, all EMC units are arranged on the same side of the printed circuit board (PCB). For a higher number of EMC units it is also possible to arrange the EMC units on both sides of the printed circuit board, i.e. some EMC units are arranged on the one side of the PCB and the other EMC units are arranged on the other side of the PCB.

In order to further improve the accommodation of the EMC circuit in the housing, according to an advantageous form of embodiment, the recess can be equipped with an EMC region, which is configured for the accommodation and/or fitting of the printed circuit board. Specifically, the EMC region can be configured as a plug-in station, which permits a positive positioning of the printed circuit board in the recess.

In an advantageous further development, the printed circuit board is formed of a ceramic substrate. Preferably, an aluminium-based substrate such as, for example, aluminium oxide, preferably Al₂O₃, is used for this purpose. Printed conductors for the electrical bonding of the EMC contacts and the respective EMC units, for example, can be printed onto this substrate, thereby permitting the exceptionally cost-effective production of the printed circuit board. Appropriate printing techniques include, for example, thick film printing. Any burn-in of the printed conductors optionally required can be executed relatively simply on a ceramic substrate, even at higher temperatures.

In a particularly advantageous further development, the respective EMC unit is configured as a SMD component. SMD stands for "Surface Mounted Device". Conversely to conventional components, a SMD component is not provided with electrical terminals which stand proud of the component, for the purposes of electrical contacting, but only with corresponding electrical contact surfaces. Accordingly, the respective SMD component is electrically bonded directly to the respective printed conductor, for example by means of a soldered joint. By the use of a ceramic substrate, soldered joints can be formed on the printed circuit board. Appropriately, the soldering temperature is lower than the burn-in temperature of the printed conductors.

Overall, the standard production of an EMC circuit, in conjunction with a ceramic printed circuit board with printed conductors printed thereon and with SMD-EMC components, can be exceptionally simply and cost-effectively achieved.

In another form of embodiment, a second such unit is constituted by an ECU component for the electrical control of the machine. This ECU component has a main body and a plurality of electrical ECU contacts in a mutually parallel and adjoining arrangement. Said ECU contacts project from said main body and extend into the aforementioned bonding space or bonding region of the recess. At least one of these ECU contacts is, preferably in the bonding region, electrically connected to one of the EMC contacts, in order to achieve the desired improvement of electromagnetic compatibility. Appropriately, the recess can have an ECU region, which is designed for the accommodation and/or fitting of the ECU component. Here again, the ECU region can be appropriately provide a plug-in station for the positive positioning of the ECU component.

According to a preferred embodiment the main body of the ECU component can extend in a body plane, wherein the printed circuit board extends in a board plane. Preferably, said board plane is inclined to said body plane with an angle of inclination. Said angle of inclination can be 90° or 90°±15°, preferably. With this inclination between the planes of the printed circuit board and the main body a compact structure can be provided for the brush-holder.

According to another embodiment, the EMC contacts can extend inclined to the board plane preferably with said angel of inclination in such a way that the EMC contacts extend more or less parallel to the body plane in order to simplify electrically bonding the respective EMC contact e.g. with an ECU contact.

In an advantageous further development, at least one of the EMC contacts can be arranged in axial alignment opposite one of the ECU contacts. The EMC contacts preferably form an EMC contact rank on the printed circuit board, in which all the EMC contacts are configured in a mutually parallel and adjoining arrangement. The ECU contacts preferably form an ECU contact rank on the ECU component, in which all the ECU contacts are configured in a mutually parallel and adjoining arrangement. The EMC contact rank and the ECU contact rank are preferably arranged in opposition on a common plane, such that the EMC contacts run parallel to the ECU contacts. At least one of the EMC contacts is arranged in axial alignment with one of the ECU contacts. Appropriately, all the EMC contacts are arranged in axial alignment with one of the ECU contacts respectively. The number of EMC contacts is customarily smaller than the number of ECU contacts. This arrangement simplifies the production of electric terminals for the units after the insertion of the units into the recess. In special embodiments the number of EMC contacts can also be equal than the number of ECU contact. It is also possible to have two different printed circuits on the two sides of the PCB, each comprising at least one EMC unit.

In an advantageous further development, at least one of the EMC contacts in the bonding region is electrically connected to a printed conductor which is routed in the housing, is extending into the bonding space or bonding region, and preferably is arranged in axial alignment opposite one of the ECU contacts, which is also electrically connected to this conductor rail in the bonding region. This means that a printed conductor of this type is electrically connected at one end to one of the EMC contacts, and at the other end to one of the ECU contacts, such the respective EMC contact is also electrically bonded to the respective ECU contact, via the indirect connection formed by this conductor rail.

If, as described heretofore, the EMC terminal rank and the ECU terminal rank are appropriately arranged in mutual opposition on a common plane, the respective printed conductor is routed in a contact region which is provided for electrical contacting with the respective EMC contact and the respective ECU contact, which is parallel to said plane and parallel to the contacts which are bonded thereto. This measure also simplifies automated production.

The brush-holder can also be equipped with a RFI component for the reduction of radio frequency interference, having RFI contacts. RFI stands for "Radio Frequency Interference".

In a first variant, the RFI component can also be inserted in the recess, thereby constituting a third such unit. In this case, the recess is provided with a RFI region for the accommodation and/or fitting of the RFI component. To this end, for example, the RFI component can constitute a plug-in station for the positive positioning of the RFI component. In a second variant, a separate component support for the RFI component can be configured on the housing, independently of the recess and which, specifically, does not need to be accessible from the installation side. It is also conceivable that the RFI component can be moulded into the plastic of the housing. The RFI component can here be electrically bonded with corresponding conductor rails, which are routed in the housing, before the plastic moulding of the housing is applied. If, in accordance with the first variant, the RFI component constitutes a third unit, the RFI contacts are connected to the conductor rails in the RFI region. Regardless of whether the first variant or the second variant is executed, at least one EMC contact and/or at least one ECU contact is electrically connected to a conductor rail which is routed to the RFI component.

In a further advantageous form of embodiment, the conductor rails form a conductor frame, which is enclosed in the plastic moulding of the housing, such that the contact points of the conductor rails, at least in the brush support and in the recess, are exposed, i.e. are not covered by plastic. On the brush-holder, these conductor rails can also constitute exposed electric terminal points, i.e. which are not enclosed in the plastic moulding, for example for earthing or grounding, or for the routing of current to a current-consuming electric machine, e.g. an electric motor, or for the tapping of current from a current-generating electric machine, e.g. a generator. Likewise, terminal points for a phase signal and for a lighting tap can be provided. According to the aforementioned second variant, the RFI component can be integrated in this conductor frame, and be likewise enclosed in the plastic moulding of the housing. It is also possible to integrate the RFI component by welding the FRI component to metal terminals of the conductor frame and by moulding the plastic housing over the arrangement consisting of the conductor frame and the FRI component welded thereto.

In another form of embodiment, the ECU component can be provided with a main body made of plastic, from which extend the ECU contacts, and with a metal plate which is solidly bonded to the main body and which projects above the man body on a side facing away from the ECU contacts, where it bears on a shoulder which is configured in the ECU region. A configuration of this type for the ECU component is described as a "multi-leaded power package". The metal plate permits the evacuation of heat, which is generated in the ECU component during operation.

According to a further development, a heat sink can be arranged on the housing, such that it is extensively in contact with the metal plate of the ECU component. By means of the heat sink, the heat of the ECU component delivered to the metal plate can be absorbed and evacuated, in order to prevent an overheating of the ECU component. The heat sink is generally a metal component, which can discharge heat into the environment in the form of thermal radiation. The heat sink is thus arranged on the housing, such that it is in direct contact with this environment. The heat sink can thus be configured with or without cooling ribs.

In a further advantageous form of embodiment, the recess is closed by a front cover which is fitted to the front side or the installation side, respectively. All the units are protected from impurities accordingly. In an advantageous form of embodiment, the front cover can constitute the aforementioned heat sink. In other words, the front cover is configured as a metal component and is designed such that, in the installed state, it is extensively in contact with the metal plate of the ECU component. The front cover thus assumes a dual function.

According to an example which is not according to the invention, the recess configured on the installation side is closed on a side of the housing facing away from the installation side, i.e. on the back side of the housing. In other words, the recess does not constitute a through-opening which penetrates the housing. This design simplifies the fitting of the brush-holder and the manufacture of the housing.

Appropriately, the respective electrical connection can be constituted by a soldered joint or by a welded joint, which is specifically formed by resistance spot welding. This bonding method can be executed by a standard mechanical process. The recess, or the arrangement of units accommodated therein, is designed such that bonding techniques of this type can be automatically executed by means of an appropriate machine.

According to the invention, on the other hand, said recess constitutes at least in the bonding region such a through-opening which penetrates the housing. In this case the housing is provided, on the back side, with an opening, which is open to the bonding region. The position and dimension of this opening is provided in such a way, that for electrically bonding a resistance welding process, preferably a resistance spot welding process, with a first and second electrode can be performed in the bonding region by introducing the first electrode from the front side into the bonding region and by introducing the second electrode from the back side into the bonding region. Therefore, for example, at least one of the EMC contacts can be welded by resistance welding to one of the ECU contacts and/or to one of the conductor rails. In this case, the bonding takes place from the installation side and from the back side.

An electric machine according to the invention, which can be an electric motor and/or a generator, comprises a stator, a rotor and a brush-holder of the aforementioned type, which is secured to the stator, adapted to provide electrical contact with rotor windings of the rotor. Preferably, the machine is a lighting dynamo, i.e. alternator, for a combustion engine in a motor vehicle. The machine can also be a starter for a combustion engine in a motor vehicle. In state-of-the-art vehicles, a starter-generator can be employed, i.e. an electric machine which can operate as an electric motor and as a generator.

According to a preferred embodiment, the electric machine can be provided with the aforementioned brush-holder designed according to the embodiment having a body plane. Usually, the rotor drives an impeller or fan for generating a cooling air stream through the stator. Preferably, the brush-holder is arranged at the stator in such a way that the body plane of the ECU component extends essentially perpendicular to a main flow direction of the cooling air stream in the area of the brush-holder and/or essentially perpendicular to a rotational axis of the rotor. This construction enhances the cooling effect for the ECU component. A further improvement can be achieved, when the electric machine is provided with the aforementioned brush-holder having a heat sink. Said heat sink in particular extends in a heat sink plane. Usually, the rotor drives an impeller or a fan for generating a cooling air stream through the stator. Preferably, the brush-holder is arranged at the stator in such a way that the heat sink plane extends essentially perpendicular to a main flow direction of the cooling air stream in the area of the brush-holder, and that the heat sink is facing the cooling air stream.

In a method according to the invention for manufacturing a brush-holder of the aforementioned type, the housing is, preferably firstly, mounted into an assembly station, such that the installation side is facing upwards. The electric and/or electronic units can, preferably then, be inserted into the recess, from the installation side. Electrical connections, by welding, can, preferably then, be formed at least from the installation side, with the housing still located in the assembly station. According to the invention the recess constitutes at least in the bonding region a through-opening, thus the spot welding can be performed from the installation side and the back side by two electrodes entering the bonding region from opposing sides. The recess can then be closed by means of a front cover. The housing, with the closed recess, can then be removed from the assembly station. Evidently, this manufacturing method requires no transfer of the housing between a plurality of assembly stations and/or no rotation of the housing. Moreover, only two steps are required for the insertion of units into the recess and for the formation of connections of the units in the recess.

Further important characteristics and advantages of the invention proceed from the sub-claims, from the drawings, and from the associated description of the figures provided with reference to the drawings.

The scope of the present invention is defined by the appended claims.

Preferred exemplary embodiments of the invention are represented in the drawings and described in greater detail in the description hereinafter, wherein the same reference figures refer to equivalent, similar or functionally equivalent units. Herein, schematically in each case,
- Fig. 1: shows an isometric view of an electric machine with a brush-holder,
- Fig. 2: shows an isometric view according to Fig. 1, but with part of the machine housing removed in the region of the brush-holder,
- Fig. 3: shows an isometric view of the brush-holder in a first form of embodiment, but with no electrical and/or electronic units in a recess of the brush-holder,
- Fig. 4: shows a view according to Fig. 3, but with units fitted in the recess,
- Fig. 5: shows an isometric view of an EMC circuit,
- Fig. 6: shows an isometric view of the brush-holder in a second form of embodiment, with an open recess in a housing of the brush-holder,
- Fig. 7: shows an isometric view of the brush-holder according to Fig. 6, but from a different viewing direction, wherein the recess is closed by a front cover,
- Fig. 8: shows a view according to Fig. 7 in which, however, the plastic of the housing, the units accommodated in the recess and the front cover have been omitted,
- Fig. 9: shows a simplified section of the housing in a bonding region during a resistance welding process, and
- Fig. 10: shows the section of Fig. 9 after the resistance welding process.

According to Figs. 1 and 2 an electric machine 1, preferably a generator, and specifically a lighting dynamo, which can however also be configured as an electric motor, and preferably also as a starter-generator, comprises an external stator 2 and an internal rotor 3. In Fig. 1, the rotor 3 is covered by a housing section 4 of the machine 1, which is omitted in Fig. 2. The housing section 4 is solidly bonded to the stator 2. Moreover, a brush-holder 5 is secured to the housing section 4. By means of the housing section 4, the brush-holder 5 is thus also secured to the stator 2. The function of the brush-holder 5 is electrically contacting of rotor windings 6 of the rotor 3, of which, however, only a feeder can be seen in Fig. 2. In this embodiment of the machine 1 the rotor 3 drives an impeller 54 or a fan 54 for generating a cooling air stream 55 through the stator 2. Said cooling air stream 55 is indicated in Fig. 1 and 2 by arrows and flows essentially in the axial direction X of the stator 2 or the machine 1, respectively. Thus, said arrows simultaneously indicate a main flow direction of the cooling air stream 55. The axial direction X of the machine 1 is indicated in Fig. 1 and 2 by a double-arrow and extends parallel to a rotational axis 56 of the rotor 3. Therefore, the cooling air gas stream 55 flows essentially parallel to the rotational axis 56 at least within the stator 2 and before entering the stator 2, i.e. upstream of the stator 2. The fan 54 usually is a radial impeller, thus the cooling air stream 55 flows radially behind the fan 54, i.e. downstream of the fan 54.

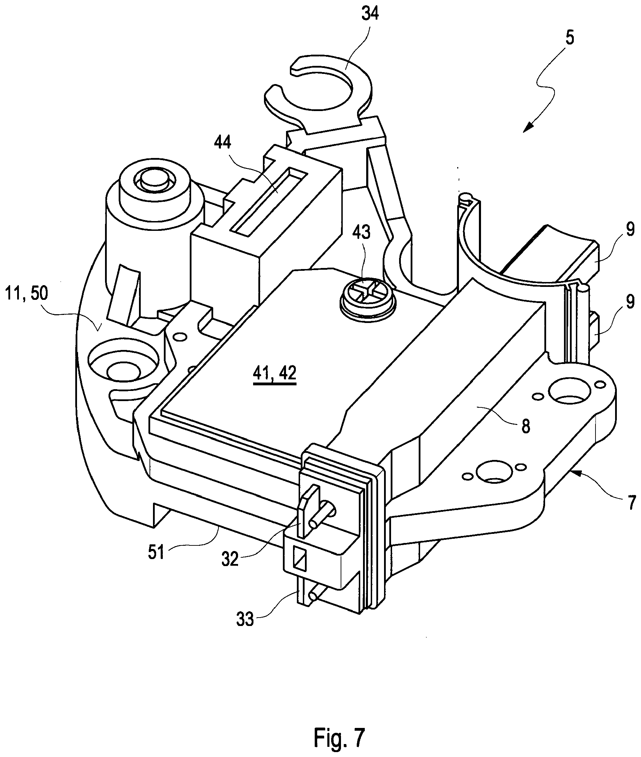

According to Figs. 1 to 4, 6 and 7, the brush-holder 5 comprises a housing 7, on which a brush support 8 is configured. The brush support 8 accommodates two brushes 9 for electrically contacting of the rotor windings 6. According to Fig. 2 corresponding slip rings 10 can be arranged on the rotor 3 for this purpose, with which one brush 9 respectively is in contact. The housing 7 shows a front side 50, which is the upper side in Fig. 1 to 4, 6 and 7, and a back side 51, which is turned away from the front side 50 and is the lower side in Fig. 1 to 4, 6 and 7. The upper or front side 50 defines an installation side 11 of the housing 7.

On said installation side 11, the housing 7 has a recess 12 for the accommodation of electrical and/or electronic units 13. These units 13 can thus be inserted into the recess 12 from the installation side 11, such that they are also electrically connectable from said installation side 11.

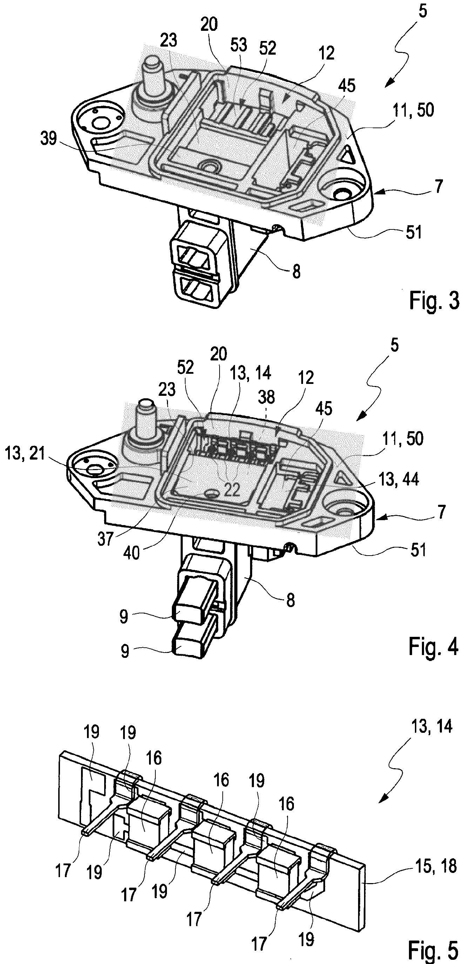

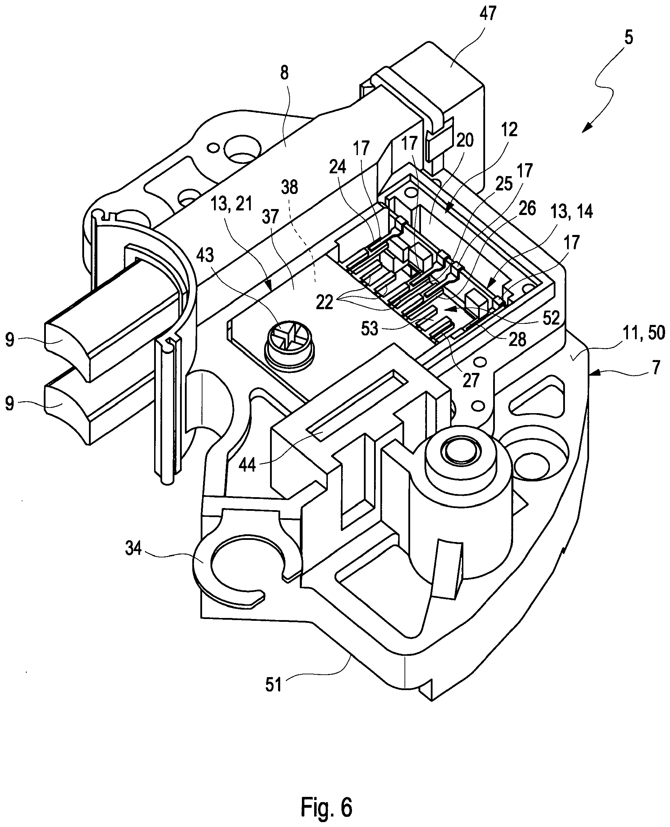

A first such unit 13 is formed by an EMC circuit 14, which improves the electromagnetic compatibility of the machine 1. According to Fig. 5, the EMC circuit 14 has a printed circuit board 15, upon which a plurality of EMC units 16 and a plurality of electrical EMC contacts 17 are arranged. The EMC contacts 17 are configured in a mutually parallel and adjoining arrangement. Said EMC contacts 17 project from said printed circuit board 15. In the example represented, for exemplary purposes only, exactly four such EMC contacts 17 are provided. Appropriately, the printed circuit board 15 is formed of a ceramic substrate 18 which is produced, for example, from an aluminium-based material. Printed conductors 19 are printed onto the substrate 18, for example by means of thick film printing. By means of the printed conductors 19, the EMC contacts 17 and the EMC units 16 are electrically mutually contacted, or interconnected to constitute the EMC circuit 14. In the example shown in Fig. 5, each of the EMC units 16 is configured as a SMD component, such that they are directly electrically connected to the respective printed conductor 19, for example by means of soldered joints. According to Figs. 3, 4 and 6, an EMC region 20 is configured in the recess 12, into which the printed circuit board 15 can be positively inserted. The recess 12 also comprises a bonding region 52 depicted in Fig. 3, 4 and 6. Said bonding region 52 defines a space within the recess 12. As can be seen in Fig. 6 the EMC contacts 17 extend into said bonding region 52.

A second such unit 13 can be constituted by an ECU component 21, which can be seen in Figs. 4 and 6. The function of the ECU component 21 is the electrical control of the machine 1, and it has a main body 38 and a plurality of electrical ECU contacts 22, which are configured in a mutually parallel and adjoining arrangement. The ECU contacts 22 project from said main body 38. In the example shown, exactly eight such ECU terminals 22 are provided on the ECU component 21. At least one of these ECU contacts 22 is electrically connected to one of the EMC contacts 17. In the example represented here, each EMC contact 17 is electrically connected to exactly one ECU contact 22. The recess 12 incorporates an ECU region 23, which is designed for the insertion of the ECU component 21, and which specifically permits a positive positioning of the ECU component 21 in the recess 12. Also the ECU contacts 22 extend into the bonding region 52.

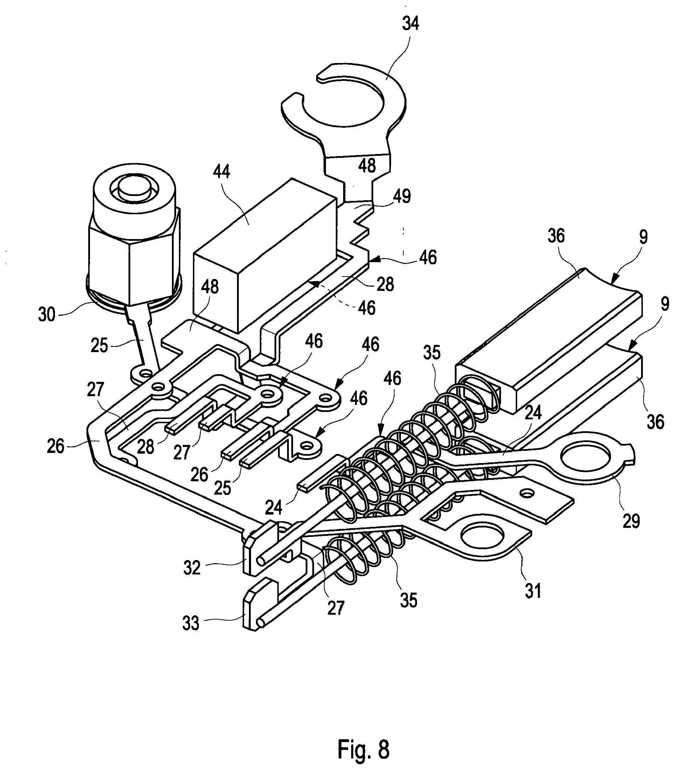

As can be seen most clearly from Fig. 6, each of the EMC contacts 17 is axially aligned with one of the ECU contacts 22 respectively, and is arranged in opposition thereto in the recess 12. According to Fig. 6, each of the four EMC contacts 17 is thus arranged opposite a separate ECU contact 22 respectively. The opposing contacts 17 and 22 are electrically interconnected. This is effected by means of conductor rails 24, 25, 26, 27, 28, which are routed within the housing 7. In the interests of clearer identification of the conductor rails 24, 25, 26, 27, 28, and the circuit connection thereof, the constituent plastic of the housing 7 is omitted from Fig. 8. The conductor rails 25 to 28 have contact points which are exposed, i.e. are not covered by the plastic of the housing 7. Such a contact point on each of the printed conductors 24 to 28 is arranged within the recess 12, in particular within the bonding region 52. Four out of the total of five contact points are thus arranged in the recess 12, such that electrical connection of four EMC contacts 17 with the associated ECU contacts 22 can be executed by means thereof. According to Fig. 6, the corresponding contacts 17, 22 are arranged on the associated contact point of the respective conductor rail 24, 25, 26, 28. The respective electrical connection can then be formed at this point by means of a soldered joint - which does not form part of the invention, or a welded joint.

The first conductor rail 24 is routed to a first terminal point 29 on the brush-holder 5 and permits the transmission of a phase signal, or the "W-terminal". The phase signal is outwardly-routed, if the machine 1 is a generator. Conversely, if the machine 1 is an electric motor, the phase signal is sourced from the exterior. This first conductor rail 24 is connected to the ECU component 21 and to the EMC circuit 14 via the corresponding contacts 17, 22.

The second conductor rail 25 is routed to a second terminal point 30 on the brush-holder 5 which functions, for example, as a lighting terminal, or "L terminal". The second conductor rail 25 is also connected to the ECU component 21 and to the EMC circuit 14 via the corresponding contacts 17, 22.

The third conductor rail 26 is routed to a third terminal point 31 on the brush-holder 5, which customarily serves as the earth or ground connection, or the "E terminal" or "Gnd terminal". The third conductor rail 26 is also electrically connected, via a corresponding contact point 32, with the one brush 9 - in Fig. 8, the upper brush 9. Moreover, the third conductor rail 26 is also connected to the ECU component 21 and to the EMC circuit 14 via the corresponding contacts 17, 22. Additionally, the third conductor rail 26 also can be connected to a RFI component 44, which will be discussed more detailed below, via a corresponding contact point 48.

The fourth conductor rail 27 is also provided with a contact point 33, by means of which it is electrically connected to the other brush 9 - in Fig. 8, the lower brush 9. The fourth conductor rail 27 thus connects the other or lower brush 9 to the ECU component 21 via the corresponding ECU contact 22.

The fifth conductor rail 28 forms a fourth terminal point 34 on the brush-holder 5, via which electric power can be tapped or infed, depending upon whether the machine 1 is configured or operated as a generator or as an electric motor. The fourth terminal point 34 thus serves for the supply of power or the infeed of power, and can also be designated as the "B terminal", or "B+ terminal" respectively. The fifth conductor rail 28 is connected to the ECU component 21 via the corresponding ECU contact 22. Additionally, the fifth conductor rail 28 also can be connected to aforementioned RFI component 44 via a corresponding contact point 49.

In Fig. 8, pre-tensioning springs 35 can also be seen, by means of which a contact piece 36 of the respective brush 9 within the brush support 8 is pressed outwards, i.e. against the respective slip ring 10.

The ECU component 21 can appropriately be configured in the form of a multi-leaded power package such that it incorporates a metal plate 37, facing towards the viewer in Figs. 4 and 6, and said main body 38 preferably made of plastic, facing away from the viewer in Figs. 4 and 6, and which is covered by the metal plate 37. The ECU contacts 22 project from this main body 38. The interior of the main body 38 accommodates at least one IC, which constitutes the actual ECU, whereby IC stands for "Integrated Circuit". The metal plate 37 is solidly bonded to the main body 38, and generally projects over the main body 38, on a side facing away from the ECU contacts 22. According to Fig. 3, the recess 12 is provided with a shoulder 39 in the ECU region 23, on which the section of the metal plate 37 which projects above the main body 38 bears, when the ECU component 21 is fitted into the ECU region 23. In the section which projects above the main body 38, the metal plate 37 is appropriately provided with a through-opening 40 which can be used, e.g. for the attachment of the ECU component 21 to the housing 7.

In the examples shown here, the recess 12 is closable by means of a front cover 41, as represented in Figs. 1, 2 and 7. Appropriately, this front cover 41 is configured as a heat sink 42, and is thus appropriately constructed of metal, and is arranged or shaped for planar contact with the metal plate 37, when it is secured to the housing 7 for the closure of the recess 12. The front cover 41 or the heat sink 42 is appropriately secured to the housing 7 by means of a screw 43, and is specifically braced by means of the metal plate 37.

In an example not forming part of the invention, the recess 12 is only open on the installation side 11, such that the recess 12 does not constitute a penetrative through-opening in the housing 7. According to the invention, as depicted in Fig. 3 and 6 the recess 12 constitutes a penetrative through-opening in the housing 7. To this end the housing 7 is provided at its back side 51 with an opening 53 which is open to the recess 12 at least in the area of the bonding region 52. The opening 53 and the recess 12 are adapted to allow resistance spot welding in the bonding region 52 in order to establish electrical bonding between at least one of the EMC contacts 17 with one of said ECU contacts 22 and/or one of said conductor rails 24, 25, 26, 27, 28. A first and a second electrode of a resistance spot welding apparatus can be inserted into the bonding region 52 by introducing the first electrode from the front side 50 into the bonding region 52 and by introducing the second electrode from the back side 51 into the bonding region 52.

In the examples and embodiments shown here, the brush-holder 5 is moreover equipped with aforementioned RFI component 44, which reduces radio frequency interference. For the integration of the RFI component 44, two variants are envisaged, namely, a first variant according to Figs. 1 to 4, and a second variant according to Figs. 6 to 8.

In the first variant according to Figs. 1 to 4, the RFI component 44 constitutes a third unit 13, which is inserted into the recess 12 from the installation side 11. To this end, a RFI region 45 is configured in the recess 12, into which the RFI component 44 can be positively inserted. When the front cover 41 is fitted, the RFI component 44 is thus also covered.

In the second variant according to Figs. 6 to 8, the RFI component 44 is arranged on the housing 7 or installed therein, independently from or externally to the recess 12. To this end, in principle, a component support can be configured for the RFI component 44 which can be accessed from an opposing side of the housing 7 facing way from the installation side 11. So the RFI component 44 can be welded to the respective contact point 48, 49 from said opposing side of the housing 7. It is likewise conceivable for the RFI component 44 to be embedded in the plastic moulding of the housing 7, in common with the conductor rails 24 to 28. Appropriately, the conductor rails 24 to 28 can constitute a conductor frame 46, which is enclosed in the plastic moulding of the housing 7, wherein the aforementioned contact points 29, 30, 31, 32, 33, 34, 48 and 49 remain exposed as mentioned. The RFI component 44 can be incorporated into this conductor frame 26 in an appropriate manner.

Regardless of the actual integration of the RFI component 44 in the brush-holder 5, the RFI component 44 is electrically bonded to the third conductor rail 26 via contact point 48 and to the fifth conductor rail 28 via contact point 49, such that the RFI component 44 is connected via these printed conductors 26, 28 to the ECU component 21 and to the EMC circuit 14.

A method for manufacturing the aforementioned brush-holder 5 comprises the following steps:
The prefabricated housing 7 is inserted into an assembly station, which is not represented here, such that the installation side 11 is appropriately facing upwards. The units 13, specifically the EMC circuit 14 and the ECU component 21 and, in the first variant represented in Figs. 1 to 4, additionally the RFI component 44, can then be inserted into the recess 12 from the installation side 11. Thereafter, the requisite electrical connections can be formed by resistance welding, likewise from the installation side 11. The resistance spot welding is performed from the front side 50 and the back side 51 using two electrodes co-operating in opposing directions. The front cover 41 can then be fitted to the housing 7 for the closure of the recess 12. The housing 7 can then be removed from the assembly station.

Fig. 6 shows a cap 47, which is secured to the housing 7 for the coverage of the contact points 32, 33 of the third and fourth conductor rails 26, 27. The electrical connections to the brushes 9 formed at these locations are protected accordingly. The cap 47 can be clipped onto the housing 7. Additionally, the aforementioned electrical connections between the brushes 9 and the contact points 32, 33 can be sealed by means of a hard-setting plastic such as, for example, an acrylic compound or a silicone compound. Appropriately, the cap 47 is applied to the housing 7 before this plastic compound has cured or set, such that the hard-setting plastic simultaneously serves as an adhesive for the bonding of the cap 27 to the housing 7.

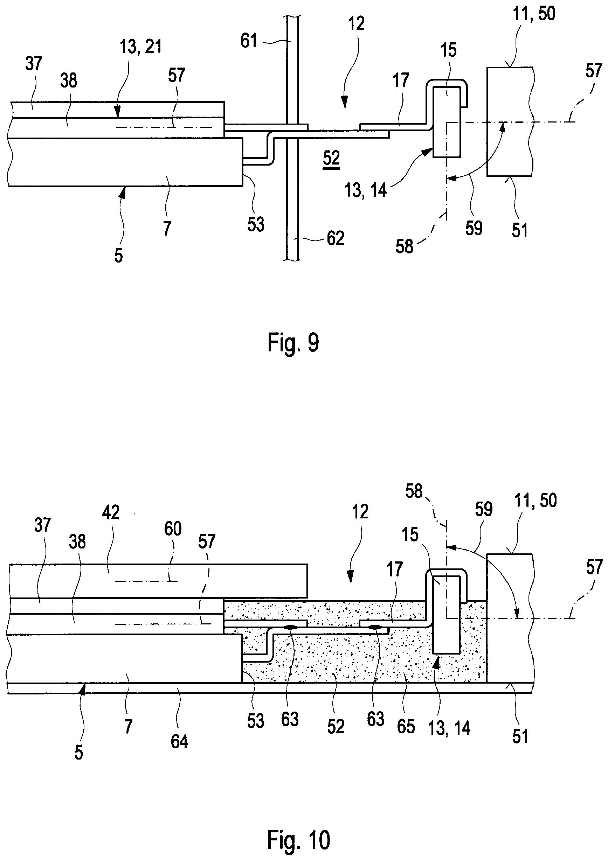

In Fig. 9 and 10 a preferred embodiment of the brush-holder 5 is depicted in more details. This preferred embodiment is also depicted in Fig. 1 to 8. The main body 38 of the ECU component 21 extends in a body plane 57, wherein the printed circuit board 15 extends in a board plane 58. In Fig. 9 and 10 both planes 57, 58 extend perpendicular to the drawing plane. The body plane 57 extends essentially horizontally, and the board plane 58 extends essentially vertically. Preferably, said board plane 58 is inclined to said body plane with an angle of inclination 59. Said angle of inclination can 90°±15°. In the example of Fig. 9 and 10 said angle of inclination 59 is about 90°.

As can be seen in Fig. 9 and 10 the respective EMC contact 17 extends inclined to the board plane 58, namely with said angel of inclination 59 in such a way that the respective EMC contact 17 extends more or less parallel to the body plane 57. In the bonding region 52 the respective EMC contact 17, the respective ECU contact 22 and the respective conductor rail 26 (or 24, 25, 28) extend parallel to each other and parallel to the body plane 57.

In Fig. 9 and 10 also the metal plate 37 is depicted which can be in contact with the heat sink 42 after manufacturing of the brush-holder 5. Said heat sink 42 is depicted in Fig. 10 and is defined by a metal plate extending in a heat sink plane 60. Said heat sink plane 60 extends in this example parallel to the body plane 57.

As can be seen in Fig. 1 and 2, the brush-holder 5 preferably is arranged at the stator 2 in such a way that the body plane 57 of the ECU component 21 extends essentially perpendicular to a main flow direction of the cooling air stream 55 in the area of the brush-holder 5 and essentially perpendicular to the rotational axis 56 of the rotor 3. Furthermore, the brush-holder 5 preferably is arranged at the stator 2 in such a way that the heat sink plane 60 extends essentially perpendicular to the main flow direction of the cooling air stream 55 in the area of the brush-holder 5, and that the heat sink 42 is facing the cooling air stream 55.

Fig. 9 and 10 also show that the housing 7 is provided, on the back side 51, with said opening 53, which is open to the bonding region 52. According to Fig. 9 the bonding region 52 is accessible for a resistance welding process with a first electrode 61 and a second electrode 62. During this resistance spot welding process the first electrode 61 is introduced from the front side 50 into the bonding region 52 and the second electrode 62 is introduced from the back side 51 into the bonding region 52 in order to create a welding connection 63 indicated in Fig. 10.

After forming the welding connections 63 said opening 53 can be closed according to Fig. 10 by a back cover 64, which is fitted to the back side 51 of the housing 7. Additionally, the recess 12 can be filled according to Fig. 10 at least partially with an electrically insulating casting compound 65 in such a way that at least one of said units 13 is at least partially embedded in the casting compound 65 and that the back cover 64 is covered with said casting compound 65.

## Claims

1. Brush-holder (5) for an electric machine (1) such as, for example, an electric motor and/or a generator,
- with a housing (7), having a brush support (8) for supporting of at least one brush (9) for electrically contacting of rotor windings (6) of the machine (1),
- wherein the housing (7) has a front side (50) and a back side (51) turned away from the front side (50),
- wherein the front side (50) forms an installation side (11),
- wherein the housing (7) is provided, on the installation side (11), with a recess (12) for the accommodation of electric and/or electronic units (13),
- wherein said recess (12) is adapted for positioning these units (13) when inserted into the recess (12) from the installation side (11), such that they can be electrically bonded from the installation side (11),
**characterized in that**
the housing (7) is provided, on the back side (51), with an opening (53), which is open to a bonding region (52) in such a way, that for electrically bonding said units (13) are-sistance welding process with a first and second electrode (61, 62) can be performed in the bonding region (52) by introducing the first electrode (61) from the front side (50) into the bonding region (52) and by introducing the second electrode (62) from the back side (51) into the bonding region (52).

2. Brush-holder according to Claim 1,
**characterized in that**
- a first such unit (13) is formed by an EMC circuit (14) for the improvement of electromagnetic compatibility, having a printed circuit board (15), on which at least one EMC unit (16) is arranged, and having a plurality of mutually parallel and adjacently arranged EMC contacts (17), which project from said printed circuit board (15),
- the recess (12) has an EMC region (20) for the accommodation of the printed circuit board (15),
- the recess (12) has a bonding region (52) into which the EMC contacts (17) extend.

3. Brush-holder according to Claim 2,
**characterized in that**
- the printed circuit board (15) is formed of a ceramic substrate (18), preferably of an aluminium-based material,
- printed conductors (19) for the electrical bonding of the EMC contacts (17) and the respective EMC unit (16) are printed onto the substrate (18), specifically by means of thick film printing,
- the respective EMC unit (16) is configured as a SMD component, and is electrically bonded directly to the respective printed conductor (19).

4. Brush-holder according to Claim 2 or 3,
**characterized in that**
- a second such unit (13) is constituted by an ECU component (21) for the control of the machine (1), having a plurality of electrical ECU contacts (22) in a mutually parallel and adjoining arrangement, which project from a main body (38) of said ECU component (21) and extend into said bonding region (52),
- at least one of the ECU contacts (22) is electrically connected to one of the EMC contacts (17),
- the recess (12) has an ECU region (23) for the accommodation of the ECU component (21).

5. Brush-holder according to Claim 4,
**characterized in that**
- the main body of the ECU component (21) extends in a body plane (57), and the printed circuit board (15) extends in a board plane (58),
- said board plane (58) is inclined to said body plane (57) with an angle of inclination (59) which can preferably be about 90°.

6. Brush-holder according to Claim 5,
**characterized in that**
the EMC contacts (17) extend inclined to the board plane (58) with said angle of inclination (59) such that the EMC contacts (17) extend parallel to the body plane (57).

7. Brush-holder according to any one of Claims 4 to 6,
**characterized in that**
at least one of the EMC contacts (17) is arranged in axial alignment opposite one of the ECU contacts (22).

8. Brush-holder according to any one of Claims 4 to 7,
**characterized in that**
at least one of the EMC contacts (17) in the bonding region (52) is electrically connected to a conductor rail (24, 25, 26, 28) which is routed in the housing (7), is extending into the bonding region (52), and is preferably arranged in axial alignment opposite to one of the ECU contacts (22), which is also electrically connected to this conductor rail (24, 25, 26, 28) in the bonding region (52).

9. Brush-holder according to any one of Claims 4 to 8,
**characterized in that**
- conductor rails (26, 27) are configured in the housing (7), which are routed from the brush support (8) to the bonding region (52),
- at least one of the ECU contacts (22) is connected to one such conductor rail (26, 27) which is routed to the brush support (8).

10. Brush-holder according to Claims 8 and 9,
**characterized in that**
the conductor rails (24, 25, 26, 27, 28) form a conductor frame (46), which is enclosed in the plastic moulding of the housing (7), such that the contact points of the conductor rails (24, 25, 26, 27, 28), at least in the brush support (8) and in the recess (12), are exposed.

11. Brush-holder according to one of Claims 4 to 10,
**characterized in that**
the ECU component (21) is provided with a main body (38) made of plastic, from which extend the ECU contacts (22), and with a metal plate (37) which is solidly bonded to the main body (38) and which projects above the main body (38) on a side facing away from the ECU contacts (22), where it bears on a shoulder (39) which is configured in the ECU region (23).

12. Brush-holder according to Claim 11,
**characterized in that**
a heat sink (42) is arranged on the housing (7), such that it is extensively in contact with the metal plate (37).

13. Brush-holder according to one of Claims 1 to 12,
**characterized in that**
the recess (12) is closed by a front cover (41), which is fitted to the front side (50).

14. Brush-holder according to one of Claims 1 to 13,
**characterized in that**
the recess (12) is closed by a metal front cover (41), which is fitted to the front side (50) and is extensively in contact with the metal plate (37).

15. Brush-holder according to any one of Claims 1 to 14,
**characterized in that**
said opening (53) on the back side (51) of the housing (7) is closed by a back cover (64), which is fitted to the back side (51).

16. Brush-holder according to Claim 15,
**characterized in that**
the recess (12) is filled at least partially with an electrically insulating casting compound (65) in such a way that at least one of said units (13) is at least partially embedded in the casting compound (65) and that the back cover (64) is covered with said casting compound (65).

17. Electric machine, for example an electric motor and/or a generator,
- with a stator (2),
- with a rotor (3),
- with a brush-holder (5) according to one of the preceding claims secured to the stator (2), for electrically contacting of rotor windings (6) of the rotor (3).

18. Electric machine according to Claim 17,
**characterized in that**
- the brush-holder (5) is according to Claim 5 and has a body plane (57),
- the rotor (3) drives a fan (54) for generating a cooling air stream (55) through the stator (2),
- the brush-holder (5) is arranged at the stator (2) in such a way that the body plane (57) of the ECU component (21) extends essentially perpendicular to a main flow direction of the cooling air stream (55) in the area of the brush-holder (5) and/or essentially perpendicular to a rotational axis (56) of the rotor (3).

19. Electric machine according to Claim 17 or 18,
**characterized in that**
- the brush-holder (5) is according to Claim 12 and has a heat sink (42) extending in a heat sink plane (60),
- the rotor (3) drives a fan (54) for generating a cooling air stream (55) through the stator (2),
- the brush-holder (5) is arranged at the stator (2) in such a way that the heat sink plane (60) extends essentially perpendicular to a main flow direction of the cooling air stream (55) in the area of the brush-holder (5), and that the heat sink (42) is facing the cooling air stream (55).

20. Method for manufacturing a brush-holder (5) according to one of Claims 1 to 16, comprising the following steps:
- Insertion of the housing (7) into an assembly station, such that the installation side (11) is facing upwards,
- Insertion of the electric and/or electronic units (13) into the recess (12), from the installation side (11),
- Formation of the electrical connections, by welding, from the installation side (11),
- Closure of the recess (12) by means of the front cover (41),
- Removal of the housing (7) from the assembly station,
- wherein the formation of the electrical connections is performed by resistance welding with a first electrode (61) and a second electrode (62), wherein the first electrode (61) is inserted into the bonding region (52) from the front side (50) and the second electrode (62) is inserted into the bonding region (52) from the back side (51).

## Patentansprüche

1. Bürstenhalterung (5) für eine Elektromaschine (1) wie zum Beispiel einen Elektromotor und/oder einen Generator,
- mit einem Gehäuse (7), das einen Bürstenträger (8) zum Tragen mindestens einer Bürste (9) zum elektrischen Kontaktieren von Rotorwicklungen (6) der Maschine (1) aufweist,
- wobei das Gehäuse (7) eine Vorderseite (50) und eine Rückseite (51) aufweist, die von der Vorderseite (50) abgewandt ist,
- wobei die Vorderseite (50) eine Installationsseite (11) bildet,
- wobei das Gehäuse (7) an der Installationsseite (11) mit einer Aussparung (12) für die Aufnahme elektrischer und/oder elektronischer Einheiten (13) bereitgestellt ist,
- wobei die Aussparung (12) zum Positionieren dieser Einheiten (13) angepasst ist, wenn sie von der Installationsseite (11) in die Aussparung (12) eingeführt werden, sodass sie von der Installationsseite (11) elektrisch verbunden werden können,
**dadurch gekennzeichnet, dass**
das Gehäuse (7) an der Rückseite (51) mit einer Öffnung (53) bereitgestellt ist, die zu einem Verbindungsbereich (52) hin derart offen ist, dass zum elektrischen Verbinden der Einheiten (13) ein Widerstandsschweißprozess mit einer ersten und zweiten Elektrode (61, 62) in dem Verbindungsbereich (52) durch Einführen der ersten Elektrode (61) von der Vorderseite (50) in den Verbindungsbereich (52) und durch Einführen der zweiten Elektrode (62) von der Rückseite (51) in den Verbindungsbereich (52) durchgeführt werden kann.

2. Bürstenhalterung nach Anspruch 1,
**dadurch gekennzeichnet, dass**
- eine erste solche Einheit (13) durch eine EMC-Schaltung (14) für die Verbesserung von elektromagnetischer Kompatibilität gebildet ist, mit einer Leiterplatte (15), auf der mindestens eine EMC-Einheit (16) angeordnet ist, und mit einer Vielzahl von wechselseitig parallelen und angrenzend angeordneten EMC-Kontakten (17), die von der Leiterplatte (15) abstehen,
- die Aussparung (12) einen EMC-Bereich (20) für die Aufnahme der Leiterplatte (15) hat,
- die Aussparung(12) einen Verbindungsbereich (52) hat, in den sich die EMC-Kontakte (17) erstrecken.

3. Bürstenhalterung nach Anspruch 2,
**dadurch gekennzeichnet, dass**
- die Leiterplatte (15) aus einem keramischen Substrat (18) gebildet ist, vorzugsweise aus einem Material auf Aluminiumbasis,
- gedruckte Leiter (19) für die elektrische Verbindung der EMC-Kontakte (17) und der entsprechenden EMC-Einheit (16) auf das Substrat (18) gedruckt sind, insbesondere mittels Dickfilmdruck,
- die entsprechende EMC-Einheit (16) als eine SMD-Komponente konfiguriert ist und direkt mit dem entsprechenden gedruckten Leiter (19) elektrisch verbunden ist.

4. Bürstenhalterung nach Anspruch 2 oder 3,
**dadurch gekennzeichnet, dass**
- eine zweite solche Einheit (13) durch eine ECU-Komponente (21) für die Steuerung der Maschine (1) gebildet ist, mit einer Vielzahl von elektrischen ECU-Kontakten (22) in einer wechselseitig parallelen und angrenzenden Anordnung, die von einem Hauptkörper (38) der ECU-Komponente (21) abstehen und sich in den Verbindungsbereich (52) erstrecken,
- mindestens einer der ECU-Kontakte (22) elektrisch mit einem der EMC-Kontakte (17) verbunden ist,
- die Aussparung (12) einen ECU-Bereich (23) für die Aufnahme der ECU-Komponente (21) hat.

5. Bürstenhalterung nach Anspruch 4,
**dadurch gekennzeichnet, dass**
- der Hauptkörper der ECU-Komponente (21) sich in einer Körperebene (57) erstreckt und die Leiterplatte (15) sich in einer Plattenebene (58) erstreckt,
- die Plattenebene (58) zu der Körperebene (57) mit einem Neigungswinkel (59) geneigt ist, der vorzugsweise etwa 90° sein kann.

6. Bürstenhalterung nach Anspruch 5,
**dadurch gekennzeichnet, dass**
die EMC-Kontakte (17) sich geneigt zu der Plattenebene (58) mit dem Neigungswinkel (59) erstrecken, sodass die EMC-Kontakte (17) sich parallel zu der Körperebene (57) erstrecken.

7. Bürstenhalterung nach einem der Ansprüche 4 bis 6,
**dadurch gekennzeichnet, dass**
mindestens einer der EMC-Kontakte (17) in axialer Ausrichtung gegenüber einem der ECU-Kontakte (22) angeordnet ist.

8. Bürstenhalterung nach einem der Ansprüche 4 bis 7,
**dadurch gekennzeichnet, dass**
mindestens einer der EMC-Kontakte (17) in dem Verbindungsbereich (52) elektrisch mit einer Leiterschiene (24, 25, 26, 28) verbunden ist, die in dem Gehäuse (7) geroutet ist, sich in den Verbindungsbereich (52) erstreckt und vorzugsweise in axialer Ausrichtung gegenüber einem der ECU-Kontakte angeordnet ist, der auch elektrisch mit dieser Leiterschiene (24, 25, 26, 28) in dem Verbindungsbereich (52) verbunden ist.

9. Bürstenhalterung nach einem der Ansprüche 4 bis 8,
**dadurch gekennzeichnet, dass**
- Leiterschienen (26, 27) in dem Gehäuse (7) konfiguriert sind, die von dem Bürstenträger (8) zu dem Verbindungsbereich (52) geroutet sind,
- mindestens einer der ECU-Kontakte (22) mit einer solchen Leiterschiene (26, 27) verbunden ist, die zu der Bürstenhalterung (8) geroutet ist.

10. Bürstenhalterung nach einem der Ansprüche 8 und 9,
**dadurch gekennzeichnet, dass**
die Leiterschienen (24, 25, 26, 27, 28) einen Leiterrahmen (46) bilden, der in der Kunststoffform des Gehäuses (7) eingeschlossen ist, sodass die Kontaktpunkte der Leiterschienen (24, 25, 26, 27, 28), mindestens in der Bürstenhalterung (8) und in der Aussparung (12), freiliegen.

11. Bürstenhalterung nach einem der Ansprüche 4 bis 10,
**dadurch gekennzeichnet, dass**
die ECU-Komponente (21) mit einem Hauptkörper (38) aus Kunststoff bereitgestellt ist, von dem sich die ECU-Kontakte (22) erstrecken, und mit einer Metallplatte (37), die fest mit dem Hauptkörper (38) verbunden ist und die an einer Seite, die von den ECU-Kontakten (22) abgewandt ist, über den Hauptkörper (38) vorsteht, wo sie auf einer Schulter (39) liegt, die in dem ECU-Bereich (23) konfiguriert ist.

12. Bürstenhalterung nach Anspruch 11,
**dadurch gekennzeichnet, dass**
eine Wärmesenke (42) an dem Gehäuse (7) angeordnet ist, sodass sie weitgehend mit der Metallplatte (37) in Kontakt ist.

13. Bürstenhalterung nach einem der Ansprüche 1 bis 12,
**dadurch gekennzeichnet, dass**
die Aussparung (12) durch eine Vorderabdeckung (41) geschlossen ist, die an der Vorderseite (50) befestigt ist.

14. Bürstenhalterung nach einem der Ansprüche 1 bis 13,
**dadurch gekennzeichnet, dass**
die Aussparung (12) durch eine Metallvorderabdeckung (41) geschlossen ist, die an der Vorderseite (50) befestigt ist und weitgehend mit der Metallplatte (37) in Kontakt ist.

15. Bürstenhalterung nach einem der Ansprüche 1 bis 14,
**dadurch gekennzeichnet, dass**
die Öffnung (53) an der Rückseite (51) des Gehäuses (7) durch eine Rückabdeckung (64) geschlossen ist, die an der Rückseite (51) befestigt ist.

16. Bürstenhalterung nach Anspruch 15,
**dadurch gekennzeichnet, dass**
die Aussparung (12) mindestens teilweise mit einer elektrisch isolierenden Vergussmasse (65) derart isoliert ist, dass mindestens eine der Einheiten (13) mindestens teilweise in der Vergussmasse (65) eingebettet ist und dass die Rückabdeckung (64) mit der Vergussmasse (65) bedeckt ist.

17. Elektromaschine für zum Beispiel einen Elektromotor und/oder einen Generator
- mit einem Stator (2),
- mit einem Rotor (3),
- mit einer Bürstenhalterung (5) nach einem der vorstehenden Ansprüche, gesichert an dem Stator (2), zum elektrischen Kontaktieren von Rotorwicklungen (6) des Rotors (3).

18. Elektromaschine nach Anspruch 17,
**dadurch gekennzeichnet, dass**
- die Bürstenhalterung (5) nach Anspruch 5 eine Körperebene (57) hat,
- der Rotor (3) ein Gebläse (54) zum Erzeugen eines Kühlluftstroms (55) durch den Stator (2) antreibt,
- die Bürstenhalterung (5) an dem Stator (2) derart angeordnet ist, dass die Körperebene (57) der ECU-Komponente (21) sich im Bereich der Bürstenhalterung (5) im Wesentlichen senkrecht zu einer Hauptströmungsrichtung des Kühlluftstroms (55) und/oder im Wesentlichen senkrecht zu einer Drehachse (56) des Rotors (3) erstreckt.

19. Elektromaschine nach Anspruch 17 oder 18,
**dadurch gekennzeichnet, dass**
- die Bürstenhalterung (5) nach Anspruch 12 ist und eine Wärmesenke (42) hat, die sich in einer Wärmesenkenebene (60) erstreckt,
- der Rotor (3) ein Gebläse (54) zum Erzeugen eines Kühlluftstroms (55) durch den Stator (2) antreibt,
- die Bürstenhalterung (5) an dem Stator (2) derart angeordnet ist, dass die Wärmesenkenebene (60) sich im Bereich der Bürstenhalterung (5) im Wesentlichen senkrecht zu einer Hauptströmungsrichtung des Kühlluftstroms (55) erstreckt, und dass die Wärmesenke (42) dem Kühlluftstrom (55) zugewandt ist.

20. Verfahren zum Herstellen einer Bürstenhalterung (5) nach einem der Ansprüche 1 bis 16, umfassend die folgenden Schritte:
- Einsetzen des Gehäuses (7) in eine Montagestation, sodass die Installationsseite (11) nach oben zeigt,
- Einsetzen der elektrischen und/oder elektronischen Einheiten (13) von der Installationsseite (11) in die Aussparung (12),
- Bilden der elektrischen Verbindungen durch Schweißen von der Installationsseite (11),
- Verschließen der Aussparung (12) mittels der Vorderabdeckung (41),
- Entfernen des Gehäuses (7) von der Montagestation,
- wobei die Bildung der elektrischen Verbindungen durch Widerstandsschweißen mit einer ersten Elektrode (61) und einer zweiten Elektrode (62) durchgeführt wird, wobei die erste Elektrode (61) in den Verbindungsbereich (52) von der Vorderseite (50) eingesetzt wird und die zweite Elektrode (62) in den Verbindungsbereich (52) von der Rückseite eingesetzt wird.

## Revendications

1. Porte-balais (5) pour une machine électrique (1) comme, par exemple, un moteur électrique et/ou un générateur,
- avec un boîtier (7) possédant un support de balais (8) pour supporter au moins un balai (9) pour établir le contact électrique du bobinage du rotor (6) de la machine (1),
- dans lequel le boîtier (7) possède un côté avant (50) et un côté arrière (51) tourné du côté opposé au côté avant (50),
- dans lequel le côté avant (50) forme un côté d'installation (11),
- dans lequel le boîtier (7) est muni, sur le côté d'installation (11), d'une cavité (12) pour recevoir des unités électriques et/ou électroniques (13),
- dans lequel ladite cavité (12) est adaptée pour positionner ces unités (13) lors de leur insertion dans la cavité (12) à partir du côté d'installation (11), de sorte qu'elles puissent être liées à partir du côté d'installation (11),
**caractérisé en ce que** le boîtier (7) est muni, sur le côté arrière (51), d'une ouverture (53), qui est ouverte sur une zone de liaison (52) de telle sorte que pour la liaison électrique, le procédé de soudage par résistance desdites unités (13) avec une première et une seconde électrode (61, 62) peut être effectué dans la zone de liaison (52) en introduisant la première électrode (61) à partir du côté avant (50) dans la zone de liaison (52) et en introduisant la seconde électrode (62) à partir du côté arrière (51) dans la zone de liaison (52).

2. Porte-balais selon la revendication 1,
**caractérisé en ce que**
- une première telle unité (13) est formée par un circuit à compatibilité électromagnétique (14) pour l'amélioration de la compatibilité électromagnétique, possédant une carte de circuit imprimé (15), sur laquelle au moins une unité à compatibilité électromagnétique (16) est disposée, et possédant une pluralité de contacts à compatibilité électromagnétique (17) disposés de manière mutuellement parallèle ou adjacente, qui font saillie à partir de ladite carte de circuit imprimé (15),
- la cavité (12) possède une zone à compatibilité électromagnétique (20) pour recevoir la carte de circuit imprimé (15),
- la cavité (12) possède une zone de liaison (52) dans laquelle les contacts à compatibilité électromagnétique (17) s'étendent.

3. Porte-balais selon la revendication 2,
**caractérisé en ce que**
- la carte de circuit imprimé (15) est formée d'un substrat en céramique (18), de préférence d'un matériau à base d'aluminium,
- des conducteurs imprimés (19) pour la liaison électrique des contacts à compatibilité électromagnétique (17) et l'unité à compatibilité électromagnétique (16) respective sont imprimés sur le substrat (18), spécifiquement au moyen d'une impression sur feuille épaisse,
- l'unité à compatibilité électromagnétique (16) respective est configurée en tant que composant pour montage en surface (CMS) et est électriquement liée directement au conducteur imprimé (19) respectif.

4. Porte-balais selon la revendication 2 ou 3,
**caractérisé en ce que**
- une seconde telle unité (13) est constituée d'un composant d'unité de commande électronique (21) pour la commande de la machine (1), possédant une pluralité de contacts d'unité de commande électronique (22) dans une disposition mutuellement parallèle ou adjacente, qui font saillie à partir d'un corps principal (38) dudit composant d'unité de commande électronique (21) et s'étendent dans ladite zone de liaison (52),
- au moins un des contacts d'unité de commande électronique (22) est électriquement connecté à l'un des contacts à compatibilité électromagnétique (17),
- la cavité (12) possède une zone d'unité de commande électronique (23) pour recevoir le composant d'unité de commande électronique (21).

5. Porte-balais selon la revendication 4,
**caractérisé en ce que**
- le corps principal du composant d'unité de commande électronique (21) s'étend dans le plan du corps (57) et la carte de circuit imprimé (15) s'étant dans un plan de carte (58),
- ledit plan de carte (58) est incliné vers ledit plan du corps (57) suivant un angle d'inclinaison (59) qui peut être préférentiellement d'environ 90°.

6. Porte-balais selon la revendication 5,
**caractérisé en ce que**
les contacts à compatibilité électromagnétique (17) s'étendent de manière inclinée par rapport au plan de carte (58) suivant ledit angle d'inclinaison (59) de sorte que les contacts à compatibilité électromagnétique (17) s'étendent parallèlement au plan du corps (57).

7. Porte-balais selon l'une quelconque des revendications 4 à 6,
**caractérisé en ce qu'**
au moins un des contacts à compatibilité électromagnétique (17) est disposé suivant un alignement axial opposé à l'un des contacts d'unité de commande électronique (22).

8. Porte-balais selon l'une quelconque des revendications 4 à 7,
**caractérisé en ce qu'**
au moins un des contacts à compatibilité électromagnétique (17) dans la zone de liaison (52) est électriquement connecté à un rail conducteur (24, 25, 26, 28) qui est acheminé dans le boîtier (7), s'étend dans la zone de liaison (52) et est préférentiellement disposé suivant un alignement axial opposé à l'un des contacts d'unité de commande électronique (22), qui est également électriquement connecté à ce rail conducteur (24, 25, 26, 28) dans la zone de liaison (52).

9. Porte-balais selon l'une quelconque des revendications 4 à 8,
**caractérisé en ce que**
- des rails conducteurs (26, 27) sont configurés dans le boîtier (7), qui sont acheminés à partir du support de balais (8) vers la zone de liaison (52),
- au moins l'un des contacts d'unité de commande électronique (22) est connecté à un tel rail conducteur (26, 27) qui est acheminé vers le support de balais (8).

10. Porte-balais selon les revendications 8 et 9,
**caractérisé en ce que**
les rails conducteurs (24, 25, 26, 27, 28) forment un cadre conducteur (46) qui est enfermé dans le moulage en plastique du boîtier (7), de sorte que les points de contact des rails conducteurs (24, 25, 26, 27, 28), au moins dans le support de balais (8) et dans la cavité (12), sont exposés.

11. Porte-balais selon l'une des revendications 4 à 10,
**caractérisé en ce que**
le composant d'unité de commande électronique (21) est muni d'un corps principal (38) fabriqué en plastique, duquel s'étendent les contacts d'unité de commande électronique (22) et d'une plaque métallique (37) qui est solidement liée au corps principal (38) et qui fait saillie au-dessus du corps principal (38) sur un côté opposé aux contacts d'unité de commande électronique (22), lorsqu'il supporte un épaulement (39) qui est configuré dans la zone d'unité de commande électronique (23).

12. Porte-balais selon la revendication 11,
**caractérisé en ce qu'**
un dissipateur thermique (42) est disposé sur le boîtier (7) de sorte qu'il est largement en contact avec la plaque métallique (37).

13. Porte-balais selon l'une des revendications 1 à 12,
**caractérisé en ce que**
la cavité (12) est fermée par un couvercle avant (41), qui est fixé au côté avant (50).

14. Porte-balais selon l'une des revendications 1 à 13,
**caractérisé en ce que**
la cavité (12) est fermée par un couvercle avant (41), qui est fixé au côté avant (50) et est largement en contact avec la plaque métallique (37).

15. Porte-balais selon l'une quelconque des revendications 1 à 14,
**caractérisé en ce que**
ladite ouverture (53) sur le côté arrière (51) du boîtier (7) est fermée par un couvercle arrière (64), qui est fixé au côté arrière (51).

16. Porte-balais selon la revendication 15,
**caractérisé en ce que**
la cavité (12) est remplie au moins partiellement avec une masse coulée d'isolation électrique (65) de sorte qu'au moins une desdites unités (13) est au moins partiellement intégrée à la masse coulée (65) et que le couvercle arrière (64) est recouvert de ladite masse coulée (65).

17. Machine électrique, par exemple un moteur électrique et/ou un générateur,
- avec un stator (2),
- avec un rotor (3),
- avec un porte-balais (5) selon l'une des revendications précédentes fixé sur le stator (2), pour établir le contact électrique du bobinage du rotor (6) du rotor (3).

18. Machine électrique selon la revendication 17,
**caractérisé en ce que**
- le porte-balais (5) est selon la revendication 5 et possède un plan de corps (57),
- le rotor (3) actionne un ventilateur (54) pour générer un flux d'air de refroidissement (55) à travers le stator (2),
- le porte-balais (5) est disposé au niveau du stator (2) de sorte que le plan du corps (57) du composant d'unité de commande électronique (21) s'étend essentiellement perpendiculairement à un sens d'écoulement principal du flux d'air de refroidissement (55) dans la zone du porte-balais (5) et/ou essentiellement perpendiculairement à un axe rotationnel (56) du rotor (3).

19. Machine électrique selon la revendication 17 ou 18,
**caractérisé en ce que**
- le porte-balais (5) est selon la revendication 12 et possède un dissipateur thermique (42) s'étendant dans un plan de dissipateur thermique (60),
- le rotor (3) actionne un ventilateur (54) pour générer un flux d'air de refroidissement (55) à travers le stator (2),
- le porte-balais (5) est disposé au niveau du stator (2) de sorte que le plan du dissipateur thermique (60) s'étend essentiellement perpendiculairement à un sens d'écoulement principal du flux d'air de refroidissement (55) dans la zone du porte-balais (5) et **en ce que** le dissipateur thermique (42) fait face au flux d'air de refroidissement (55).

20. Procédé de fabrication d'un porte-balais (5) selon l'une des revendications 1 à 16, comprenant les étapes suivantes :
- Insertion du boîtier (7) dans une station d'assemblage, de sorte que le côté d'installation (11) soit orienté vers le haut,
- Insertion des unités électriques et/ou électroniques (13) dans la cavité (12), à partir du côté d'installation (11),
- Formation des connexions électriques par soudage, à partir du côté d'installation (11),
- Fermeture de la cavité (12) au moyen du couvercle avant (41),
- Retrait du boîtier (7) de la station d'assemblage,
- dans lequel la formation des connexions électriques est effectuée par le soudage par résistance avec une première électrode (61) et une seconde électrode (62), dans lequel la première électrode (61) est introduite dans la zone de liaison (52) à partir du côté avant (50) et la seconde électrode (62) est introduite dans la zone de liaison (52) à partir du côté arrière (51).
